# EUROPEAN PATENT APPLICATION

(11) **EP 4 503 295 A1**
(43) Date of publication of application: **05.02.2025**
(21) Application number: 23777649.7
(22) Date of filing: 13.02.2023
(51) Int. Cl.: H01M 50/30, H01M 50/358, H01M 50/367

(54) **BATTERY PACK AND ELECTRIC DEVICE**

(30) Priority: 31.03.2022 CN 202210336192
(71) Applicant: Ningde Amperex Technology Limited, Ningde, Fujian 352100 (CN)
(72) Inventor: NONG, Wenbin, Ningde, Fujian 352100 (CN); LI, Kunlong, Ningde, Fujian 352100 (CN); WANG, Pengfei, Ningde, Fujian 352100 (CN); CAI, Guoquan, Ningde, Fujian 352100 (CN)
(74) Representative: Icosa
(86) International application number: PCT/CN2023/075593
(87) International publication number: WO 2023/185270

(57) **Abstract**

This application provides a battery pack and an electrical device. The battery pack includes a battery housing and a battery cell. The battery housing includes a first wall and a first protruding portion that protrudes beyond an inner surface of the first wall. The first protruding portion and the first wall form a first recessed portion. The battery cell is accommodated in the battery housing. A pressure relief mechanism is disposed at one end, oriented toward the first wall, of the battery cell along a first direction. The end, oriented toward the first wall, of the battery cell is connected to the first protruding portion. Along the first direction, a projection of the pressure relief mechanism is located within a projection of the first recessed portion. Through the above structure, the first protruding portion and the first wall can separate the pressure relief mechanism of one battery cell from that of other battery cells, thereby reducing the impact of the emissions of the pressure relief mechanism on other battery cells, and in turn, reducing the mutual impact between the battery cells and enhancing the safety of the battery.

## Description

### CROSS REFERENCE TO THE RELATED APPLICATIONS

This application claims priority to Chinese Patent Application No. 202210336192.8, filed on March 31, 2022 and entitled "BATTERY PACK AND ELECTRICAL DEVICE", which is incorporated herein by reference in its entirety.

### TECHNICAL FIELD

This application relates to the technical field of batteries, and in particular, to a battery pack and an electrical device.

### BACKGROUND

A rechargeable battery cell is a battery that is reusable after the active material is activated by charging the battery cell that is discharged. Rechargeable battery cells are widely used in electronic devices such as mobile phones and laptop computers.

A battery pack typically includes a plurality of battery cells to meet the voltage requirement of electronic devices. In the development of battery technology, how to enhance the safety of the battery pack has always been a research topic in the industry.

### SUMMARY

In view of the above problems, this application provides a battery pack and an electrical device. The pressure relief mechanisms can be separated between the battery cells in the battery pack, thereby reducing the mutual impact between the battery cells and enhancing the safety of the battery pack.

According to a first aspect, this application provides a battery pack. The battery pack includes a battery housing and a battery cell. The battery housing includes a first wall and a first protruding portion that protrudes beyond an inner surface of the first wall. The first protruding portion and the first wall form a first recessed portion. The battery cell is accommodated in the battery housing. A pressure relief mechanism is disposed of the battery cell along a first direction, the end being oriented toward the first wall; one end of the battery cell is connected to the first protruding portion, the end being oriented toward the first wall. Along the first direction, a projection of the pressure relief mechanism is located within a projection of the first recessed portion.

Through the above structure, the first protruding portion and the first wall can separate the pressure relief mechanism of one battery cell from that of other battery cells, thereby reducing the impact of the emissions of the pressure relief mechanism on other battery cells, and in turn, reducing the mutual impact between the battery cells and enhancing the safety of the battery.

In the battery pack disclosed in some embodiments of this application, the first recessed portion includes a pressure relief region disposed on the first wall. When viewed along the first direction, a projection of the pressure relief region overlaps a projection of the pressure relief mechanism. The pressure relief region and the pressure relief mechanism is configured to release internal pressure of the battery cell. The gas or liquid released by the pressure relief mechanism of the battery cell can be expelled from the pressure relief region to the outside of the battery housing after being expelled into the first recessed portion, thereby reducing the pressure in the first recessed portion and ensuring the safety of the battery pack.

In the battery pack disclosed in some embodiments of this application, the pressure relief region includes a first region and a second region. Along the first direction, the first region is farther away from the first protruding portion than the second region. In this way, the first region can form a fragile region in the pressure relief region, the first region in the pressure relief region can rupture, so as to implement partial rupture of the pressure relief region.

In the battery pack disclosed in some embodiments of this application, the first region is disposed outside the second region. Along the first direction, the first region forms a closed first region projection, the second region forms a closed second region projection, and the second region projection is located within the first region projection. In this way, the second region can be positioned within the range of the first region. When the first region is ruptured, the gas or liquid in the second region can flow out entirely.

In the battery pack disclosed in some embodiments of this application, the first wall includes a first part and a second part. The first part and the first protruding portion form the first recessed portion. Along the first direction, a thickness of the first region is less than a thickness of the second part. The first region becomes a fragile region by being thinned by removal of material, so that the first region ruptures before other parts of the first wall, thereby enabling the first wall to rupture at a preset position.

In the battery pack disclosed in some embodiments of this application, a thickness of the first region is less than a thickness of the second region along the first direction. In this way, the first region is made to be the rupture position in the pressure relief region, thereby facilitating setting of the pressure relief position.

In the battery pack disclosed in some embodiments of this application, the first wall includes a first part and a second part. The first part and the first protruding portion form the first recessed portion. Along the first direction, the pressure relief region is far away from an inner surface of the second part, thereby facilitating the pressure relief region to rupture and release pressure.

In the battery pack disclosed in some embodiments of this application, the battery housing is provided with a second protruding portion, the second protruding portion protrudes beyond the inner surface of the first wall and is disposed outside the second protruding portion. The first protruding portion enables the binder to flow to the pressure relief region, thereby reducing the impact of the binder on the pressure relief process.

In the battery pack disclosed in some embodiments of this application, a second recessed portion is disposed on the inner surface of the first wall. Along the first direction, a projection of the second recessed portion is located within a projection of the second protruding portion, thereby forming a clearance between the first wall and the battery cell to buffer the emissions of the battery cell to some extent.

In the battery pack disclosed in some embodiments of this application, the first recessed portion, the second recessed portion, the second protruding portion, and the battery cell form an accommodation cavity. The formed accommodation cavity can store a specified amount of emissions of the battery cell and play a role in buffering the emissions.

In the battery pack disclosed in some embodiments of this application, a binder is disposed between the second protruding portion and the first protruding portion. The binder is bonded to at least one of the battery cell or the first wall. The binder fills the clearance between the second protruding portion and the first protruding portion, thereby not only firmly connecting the battery cell to the first wall, but also isolating the first recessed portion from the surrounding battery cells, and effectively preventing the emissions of the first recessed portion from flowing to the surrounding battery cells.

In the battery pack disclosed in some embodiments of this application, the battery housing is provided with a third protruding portion, the third protruding portion protrudes beyond the inner surface of the first wall; The third protruding portion is disposed between the second protruding portion and the first protruding portion. A binder is disposed in a clearance between the third protruding portion and the first protruding portion. The binder is bonded to at least one of the battery cell or the first wall. The binder fills the clearance between the third protruding portion and the first protruding portion, thereby not only firmly connecting the battery cell to the first wall, but also isolating the first recessed portion from the surrounding battery cells, and effectively preventing the emissions of the first recessed portion from flowing to the surrounding battery cells.

In the battery pack disclosed in some embodiments of this application, a constraining portion is further disposed on the inner surface of the first wall. The constraining portion is disposed outside the first protruding portion to accommodate one end of the battery cell, so that one end of the battery cell can be conveniently connected to the inner surface of the first wall.

In the battery pack disclosed in some embodiments of this application, the battery pack further includes a circuit board. The circuit board is electrically connected to the battery cell. The circuit board is accommodated in the battery housing. The battery housing can protect the circuit board.

In the battery pack disclosed in some embodiments of this application, the battery cell includes a positive terminal and a negative terminal. Both the positive terminal and the negative terminal are disposed at one end of the battery cell, the end being facing away from the pressure relief mechanism. The circuit board is disposed on one side of the battery cell and is electrically connected to the positive terminal and the negative terminal, the side being facing away from the pressure relief mechanism,. In this way, the circuit board is disposed on one end, away from the pressure relief mechanism, of the battery cell, so as to reduce the impact of the emissions of the pressure relief mechanism on the circuit board.

In the battery pack disclosed in some embodiments of this application, the battery pack further includes a bracket and a first bonding material. A plurality of battery cells and the bracket are accommodated in the battery housing. Each battery cell includes a cell housing, an electrode terminal, and an electrode assembly disposed in the cell housing. The bracket is provided with a connecting hole to be filled with the first bonding material. The connecting hole is filled with the first bonding material. The plurality of battery cells are connected to the bracket through the first bonding material in the connecting hole, thereby implementing the fixation of the plurality of battery cells on the bracket. In this way, the battery cells are interlocked with other battery cells through the bracket, thereby effectively constraining the movement of the battery cells, effectively reducing the bumps and collision of the battery cells, improving the performance of protection for the battery pack, and enhancing the safety of the battery.

In the battery pack disclosed in some embodiments of this application, the bracket includes a supporting wall. The connecting hole penetrates the supporting wall. The supporting wall includes a first side and a second side disposed opposite to each other along the first direction. The first side is closer to the battery cell than the second side. The second side is away from the cell housing. A circuit board is disposed on the second side. In this way, the circuit board and the battery cell are disposed on two sides of the supporting wall respectively, thereby facilitating the arrangement of various components in the battery pack.

In the battery pack disclosed in some embodiments of this application, when viewed along the first direction, the connecting hole includes a first hole and a second hole, the first hole and a second hole are spaced apart from each other along the first direction. A part of the cell housing of at least one battery cell is located in the first hole. A part of the cell housing of at least one battery cell is located in the second hole. The first bonding material fills the first hole and the second hole to connect the cell housings of at least two battery cells to the supporting wall.

In the battery pack disclosed in some embodiments of this application, the connecting hole includes a third hole. When viewed along the first direction, projections of the first hole, the second hole, and the third hole are spaced apart from each other. A part of the cell housing of at least one battery cell is located in the third hole. The first bonding material in the first hole, the second hole, and the third hole connects the cell housings of at least three battery cells to the supporting wall.

In the battery pack disclosed in some embodiments of this application, the battery pack further includes a plurality of busbar components and conductive pieces. A circuit board is disposed on the same side of the plurality of battery cells. The circuit board is connected to the battery cells. Along the first direction, a projection of the circuit board at least partially overlaps a projection of at least a part of the cell housing. The circuit board includes a first lateral edge and a second lateral edge arranged in parallel along a third direction. The plurality of battery cells include at least two first battery cells. When viewed along the first direction, electrode terminals of the first battery cells and the circuit board are spaced apart from each other. The third direction is perpendicular to the first direction. The busbar components include a first busbar component configured to electrically connect at least two battery cells. The first busbar component includes a first base portion and a first connecting portion. The first base portion is connected to an adjacent first battery cell. The conductive pieces include a first conductive piece. One end of the first conductive piece is connected to the circuit board. Another end of the first conductive piece is connected to the first connecting portion. In the above technical solution, because the connecting portion extends to the first lateral edge of the circuit board, the position connected to the conductive piece is located at the first lateral edge of the circuit board, thereby increasing the area of the flat region in the middle of the circuit board, and in turn, increasing the available effective area of the circuit board. The above technical solution enables the overall area of the circuit board to still meet the requirement on the effective area after the overall area is reduced, reduces the redundancy of the circuit board, simplifies the circuit board, and simplifies the battery.

In the battery pack disclosed in some embodiments of this application, a first notch penetrating a first lateral edge is created on the circuit board. At least one of a first conductive piece or a first connecting portion passes through the first notch, so that the circuit board is disposed close to the first lateral edge to increase the area of the flat region in the middle of the circuit board.

In the battery pack disclosed in some embodiments of this application, a first conductive piece is connected to the first connecting portion after passing through a first notch.

In the battery pack disclosed in some embodiments of this application, a first angle exists between the first base portion and the first connecting portion. The first angle ranges from 60° to 150°, thereby enabling the connecting portion to extend toward the circuit board by rotating the first angle, and facilitating the centralized arrangement of the connection positions between the circuit board and the battery cells.

In the battery pack disclosed in some embodiments of this application, the first battery cells are arranged along a second direction to form a first cell group. The plurality of battery cells include at least two second battery cells. The second battery cells are arranged along the second direction to form a second cell group. When viewed along the first direction, the electrode terminals of the second battery cells and the circuit board are spaced apart from each other. The busbar components include a second busbar component configured to electrically connect at least two second battery cells. The conductive pieces include a second conductive piece. The second conductive piece connects the circuit board and the second busbar component.

Through the above structure, the battery cells in the first cell group and the second cell group are connected to the first lateral edge and second lateral edge of the circuit board, and the first lateral edge is opposite to second lateral edge, thereby increasing the available effective area of the circuit board. In this way, the above structure enables the overall area of the circuit board to still meet the requirement on the effective area after the overall area is reduced, reduces the redundancy of the circuit board, simplifies the circuit board, and simplifies the battery. This application further provides an electrical device. The safety of the electrical device is relatively high.

To achieve the above objective, this application discloses the following technical solution:

According to a second aspect, this application provides an electrical device. The electrical device includes the battery pack disclosed in any one of the foregoing technical solutions. The battery pack is configured to provide electrical energy.

The technical solutions disclosed herein bring at least the following beneficial effects:

This application provides a battery pack. The battery pack includes a battery housing and a battery cell. The battery housing includes a first wall and a first protruding portion that protrudes beyond an inner surface of the first wall. The first protruding portion and the first wall form a first recessed portion. The battery cell is accommodated in the battery housing. A pressure relief mechanism is disposed at one end, oriented toward the first wall, of the battery cell along a first direction. The end, oriented toward the first wall, of the battery cell is connected to the first protruding portion. Along the first direction, a projection of the pressure relief mechanism is located within a projection of the first recessed portion. Through the above structure, the first protruding portion and the first wall can separate the pressure relief mechanism of one battery cell from that of other battery cells, thereby reducing the impact of the emissions of the pressure relief mechanism on other battery cells, and in turn, reducing the mutual impact between the battery cells and enhancing the safety of the battery.

This application further provides an electrical device. The electrical device contains the battery pack disclosed in the above technical solutions, so that the safety of the electrical device is relatively high.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of some exemplary embodiments, a person of ordinary skill in the art becomes clearly aware of various other advantages and benefits. The drawings are merely intended to illustrate some exemplary embodiments, but not to limit this application. In all the drawings, the same reference numeral represents the same component. In the drawings:
FIG. 1 is an exploded view of a battery pack according to some embodiments of this application;
FIG. 2 is a schematic structural diagram of a second housing according to some embodiments of this application;
FIG. 3 is a top view of a battery cell according to some embodiments of this application;
FIG. 4 is a schematic diagram of an internal structure of a battery pack according to some embodiments of this application;
FIG. 5 is a close-up view of a part A shown in FIG. 2;
FIG. 6 is a schematic diagram of a positional relationship between a first region projection and a second region projection according to some embodiments of this application;
FIG. 7 is a close-up view of a part B shown in FIG. 4;
FIG. 8 is a schematic structural diagram of some components in a battery pack from a first viewing angle according to some embodiments of this application;
FIG. 9 is a schematic structural diagram of some components in a battery pack from a second viewing angle according to some embodiments of this application;
FIG. 10 is a schematic diagram of an internal structure of some components in a battery pack according to some embodiments of this application;
FIG. 11 is a schematic structural diagram of a circuit board from a first viewing angle according to some embodiments of this application;
FIG. 12 is a schematic arrangement diagram of battery cells and busbar components from a first viewing angle according to some embodiments of this application;
FIG. 13 is a schematic arrangement diagram of battery cells according to some embodiments of this application;
FIG. 14 is a schematic arrangement diagram of battery cells and busbar components from a second viewing angle according to some embodiments of this application;
FIG. 15 is a close-up view of a part C shown in FIG. 9;
FIG. 16 is a close-up view of a part D shown in FIG. 10;
FIG. 17 is a schematic structural diagram of a bracket from a first viewing angle according to some embodiments of this application;
FIG. 18 is a schematic structural diagram of a bracket from a second viewing angle according to some embodiments of this application;
FIG. 19 is a schematic structural diagram of a bracket from a third viewing angle according to some embodiments of this application;
FIG. 20 is a schematic diagram of connection between a bracket and battery cells according to some embodiments of this application;
FIG. 21 is a schematic diagram of connection between a bracket and a busbar component according to some embodiments of this application;
FIG. 22 is a schematic diagram of connecting a bracket to battery cells through a bonding material according to some embodiments of this application;
FIG. 23 is a schematic structural diagram of a first housing according to some embodiments of this application; and
FIG. 24 is a schematic diagram of an electrical device according to some embodiments of this application.

### List of reference numerals:

1. battery cell; 11. first battery cell; 101. first cell group; 12. second battery cell; 102. second cell group; 13. third battery cell; 103. third cell group; 14. fourth battery cell; 104. fourth cell group; 2. circuit board; 22. first lateral edge; 221. first notch; 23. second lateral edge; 231. second notch; 24. pass-through hole; 25. first snap slot; 3. busbar component; 31. first busbar component; 311. first connecting portion; 312. first base portion; 32. second busbar component; 321. second connecting portion; 322. second base portion; 33. third busbar component; 331. third connecting portion; 332. third base portion; 34. fourth busbar component; 341. fourth connecting portion; 342. fourth base portion; 4. conductive piece; 401. first conductive piece; 402. second conductive piece; 403. third conductive piece; 404. fourth conductive piece; 41. first part; 42. second part; 5. bracket; 50. supporting wall; 501. connecting hole; 5011. connecting sub-hole; 50111. first hole; 50112. second hole; 50113. third hole; 5012. recessed portion; 5013. through-hole; 50131. first through-hole; 50132. second through-hole; 5014. receptacle; 5015. fourth protruding portion; 502. first bonding material; 1001. first side; 1002. second side; 10. electrode terminal; 1011. positive terminal; 1012. negative terminal; 20. cell housing; 105. fifth protruding portion; 51. first buckle; 6. battery housing; 601. first housing; 602. second housing; 61. constraining rod; 7. first protruding portion; 70. first recessed portion; 8. pressure relief region; 81. first region; 810. first region projection; 82. second region; 820. second region projection; 9. second recessed portion; 1003. first wall; 10031. first part; 10032. second part; 1004. second protruding portion; 1005. first connecting portion; 1006. third protruding portion; 1007. constraining portion; 1013. pressure relief mechanism; 2000. battery pack; 3000. electrical device.

### DETAILED DESCRIPTION OF EMBODIMENTS

some embodiments of the technical solutions of this application are described in detail below with reference to the drawings. Some following embodiments are merely intended as examples to describe the technical solutions of this application more clearly, but not intended to limit the protection scope of this application.

It is hereby noted that, unless otherwise specified, the technical terms or scientific terms used in some embodiments of this application bear the meanings commonly understood by a person skilled in the technical field of some embodiments of this application.

In the description of some embodiments of this application, a directional or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a directional or positional relationship based on the illustration in the drawings, and is merely intended for ease or brevity of description of some embodiments of this application, but not intended to indicate or imply that the indicated device or component is necessarily located in the specified direction or constructed or operated in the specified direction. Therefore, such terms are not to be understood as a limitation on some embodiments of this application.

In addition, the technical terms such as "first" and "second" are used merely for ease of description, but not to indicate or imply relative importance or implicitly specify the number of technical features mentioned. In the description of some embodiments of this application, unless otherwise expressly specified, "a plurality of" means two or more.

In the description of some embodiments of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In the description of some embodiments of this application, unless otherwise expressly specified and defined, a first feature being "on" or "under" a second feature may mean that the first feature is in direct contact with the second feature, or the first feature is in indirect contact with the second feature through an intermediary. In addition, a first feature being "on", "above", or "over" a second feature may be that the first feature is exactly above or obliquely above the second feature, or simply that the first feature is at an altitude higher than the second feature. A first feature being "under", "below", or "beneath" a second feature may be that the first feature is exactly under or obliquely under the second feature, or simply that the first feature is at an altitude lower than the second feature.

Currently, the market trend shows that battery packs are widely applied increasingly. Battery packs are not only used in energy storage power systems such as hydro, thermal, wind, and solar power stations, but also widely used in electric means of transport such as electric bicycles, electric motorcycles, and electric vehicles, and used in many other fields such as communication devices, military equipment, and aerospace. The market demand for battery packs keeps soaring with the increase of the application fields of the battery packs.

The following further describes the technical solutions of a battery pack and an electrical device disclosed herein with reference to some specific embodiments.

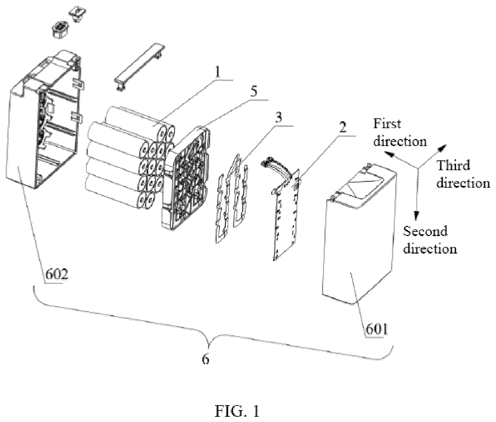

Referring to FIG. 1 to FIG. 3, FIG. 1 is an exploded view of a battery pack according to some embodiments of this application. some embodiments of this application provide a battery pack. The battery pack includes a battery housing 6, a circuit board 2, a bracket 5, a plurality of busbar components 3, a plurality of conductive pieces 4, and a plurality of battery cells 1. Each battery cell 1 includes a cell housing 20, an electrode terminal 10, and an electrode assembly disposed in the cell housing 20. The plurality of busbar components 3 are connected to the bracket 5. The plurality of battery cells 1 are connected by the plurality of busbar components 3. The bracket 5 is disposed between the plurality of battery cells 1 and the battery housing 6. The circuit board 2 is disposed between the bracket 5 and the battery housing 6, and is electrically connected to the battery cell 1 by the busbar component 3. The circuit board 2, the bracket 5, the plurality of busbar components 3, and the plurality of battery cells 1 are all accommodated in the battery housing 6. The circuit board 2 may include a battery management system. The battery management system can intelligently manage and maintain the plurality of battery cells 1.

In some embodiments, an accommodation space is formed in the battery housing 6. The battery housing 6 includes a first housing 601 and a second housing 602 connected to each other. The circuit board 2, the bracket 5, the plurality of busbar components 3, and the plurality of battery cells 1 are all accommodated in a space formed by connecting the first housing 601 and the second housing 602 together. The plurality of battery cells 1 are disposed between the bracket 5 and the second housing 602. The circuit board 2 is disposed between the bracket 5 and the first housing 601. The inner wall of the first housing 601 abuts against the bracket 5. In this way, one end of the entirety of the bracket 5 and the battery cells 1 abuts against the second housing 602 to implement fixation, the end being an end facing away from the first housing 601. The first housing 601 and the second housing 602 may be connected to each other by snap-fitting, bonding, or locking with fasteners such as a bolt assembly. A person skilled in the art may select the connection method of the first housing 601 and the second housing 602 depending on actual conditions.

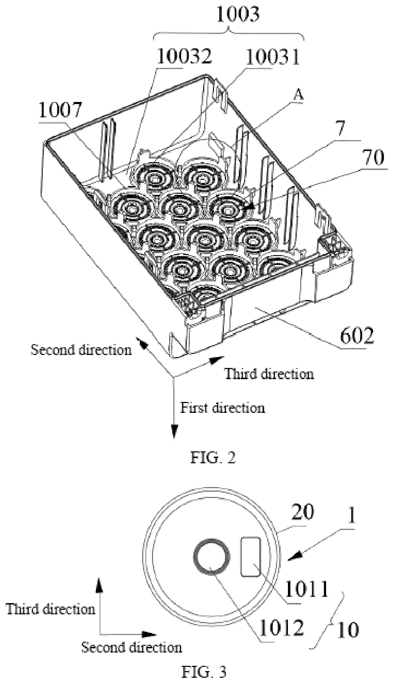

As shown in FIG. 2, the second housing 602 includes a first wall 1003 and a first protruding portion 7 that protrudes beyond an inner surface of the first wall 1003. The first protruding portion 7 and the first wall 1003 form a first recessed portion 70. along a first direction, a pressure relief mechanism 1013 is disposed at one end of the battery cell 1, the end being oriented toward the first wall 1003, . One end of the battery cell 1 is connected to the first protruding portion 7, the end being oriented toward the first wall 1003. One end of the battery cell 1 may be connected to the first protruding portion 7 by abutting, or by locking with fasteners such as a bolt assembly, or by a bonding material such as glue, the end being oriented toward the first wall 1003. Depending on actual conditions, a person skilled in the art may select the method for connecting the end, oriented toward the first wall 1003, of the battery cell 1 to the first protruding portion 7.

The pressure relief mechanism 1013 is a structure disposed on the battery cell. When the pressure inside the cell housing exceeds a safety threshold, the pressure relief mechanism 1013 is actuated to release the gas or liquid or other substances in the cell housing to balance the pressure between the inside and the outside the cell housing. The pressure relief mechanism 1013 may be a safety valve of the battery cell. The pressure relief mechanism 1013 may include a fragile region of the cell housing. When the pressure inside the cell housing exceeds a safety threshold, the pressure relief mechanism 1013 is more prone to break than other regions.

Along the first direction, the projection of the pressure relief mechanism 1013 is located within the projection of the first recessed portion 70. When the first protruding portion 7 abuts against the battery cell 1, the pressure relief mechanism 1013 is located in the first recessed portion 70. In this way, the gas and liquid released from the pressure relief mechanism 1013 can flow into the first recessed portion 70, thereby constraining the released gas and liquid from flowing to the positions of other battery cells 1, reducing the impact of the emissions on other battery cells 1, facilitating mutual isolation between a plurality of battery cells 1, reducing the mutual impact between the battery cells 1, and enhancing the overall safety of the battery pack.

As shown in FIG. 3, the electrode terminal 10 includes a positive terminal 1011 and a negative terminal 1012. The positive terminal 1011 and the negative terminal 1012 are disposed at the same end of the battery cell 1, the end being oriented toward the circuit board 2. The circuit board 2 may be disposed at one end of the battery cell 1 to implement the positive and negative electrode connection between adjacent battery cells 1. In other embodiments, the positive terminal 1011 and the negative terminal 1012 may be disposed at two opposite ends of the battery cell 1 along the first direction.

In some embodiments, the electrode assembly includes a positive electrode plate, a negative electrode plate, and a separator located between the positive electrode plate and the negative electrode plate. The positive electrode plate, the negative electrode plate, and the separator form a jelly-roll structure by winding, or form a stacked-type structure by stacking. The battery cells 1 include, but are not limited to, a lithium-ion cell, a sodium-ion cell, and the like.

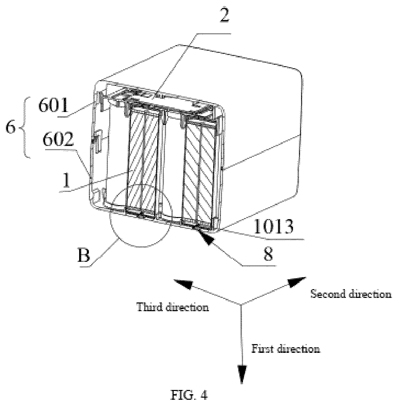

As shown in FIG. 4, the circuit board 2, the positive terminal 1011, and the negative terminal 1012 of the battery cell 1 are disposed close to the first housing 601. The positive terminal 1011 and the negative terminal 1012 of the same battery cell 1 are disposed at one end of the battery cell 1, the end being facing away from the pressure relief mechanism 1013. The electrode terminal 10 and the pressure relief mechanism 1013 of the battery cell 1 are disposed at the two ends of the battery cell 1 respectively, thereby reducing the possibility that the emissions of the pressure relief mechanism 1013 flow to the electrode terminal 10, reducing the short-circuiting risk of the battery cell 1, and further improving the safety of the battery cell 1.

In some embodiments, one end of the battery cell 1 hermetically abuts against the first protruding portion 7, the end being oriented toward the first wall 1003, thereby effectively reducing the possibility that the emissions released from the first recessed portion 70 seep or flow to the surrounding battery cells 1. In some embodiments, a binder is disposed between the first protruding portion 7 and the battery cell 1. The first protruding portion 7 is hermetically connected to one end of the battery cell 1 by the binder, the end being oriented toward the first wall 1003, thereby improving and ensuring the hermeticity between the battery cell 1 and the first protruding portion 7. The binder may be adhesive-sealant, styrofoam, potting glue, or other glue to implement a firm connection between the battery cell 1 and the first wall 1003.

In some embodiments, the first recessed portion 70 includes a pressure relief region 8 disposed on the first wall 1003. When viewed along the first direction, a projection of the pressure relief region 8 overlaps a projection of the pressure relief mechanism 1013. The pressure relief region 8 and the pressure relief mechanism 1013 are capable of releasing internal pressure of the battery pack. The gas or liquid released by the pressure relief mechanism 1013 of the battery cell 1 can be expelled from the pressure relief region 8 to the outside of the second housing 602 after being expelled into the first recessed portion 70, thereby reducing the pressure in the first recessed portion 70 and ensuring the safety of the battery pack.

In some embodiments, the pressure relief region 8 includes a first region 81 and a second region 82. Along the first direction, the first region 81 is farther away from the first protruding portion 7 than the second region 82. In this way, the first region 81 can favorably form a fragile region in the pressure relief region 8, so as to implement at least partial rupture of the pressure relief region 8.

In some embodiments, as shown in FIG. 2, the first wall 1003 includes a first part 10031 and a second part 10031. The first part 10031 and the first protruding portion 7 form the first recessed portion 70. Along the first direction, the pressure relief region 8 is far away from an inner surface of the second part 10031, thereby making the pressure relief region 8 thinner than the second part 10031, and facilitating the pressure relief region 8 to rupture and release pressure. Optionally, along the first direction, the thickness of the first region 81 is less than the thickness of the second part 10031. In this way, the pressure relief region 8 can be ruptured in the first region 81, thereby facilitating setting of the rupture position by defining the position of the first region 81.

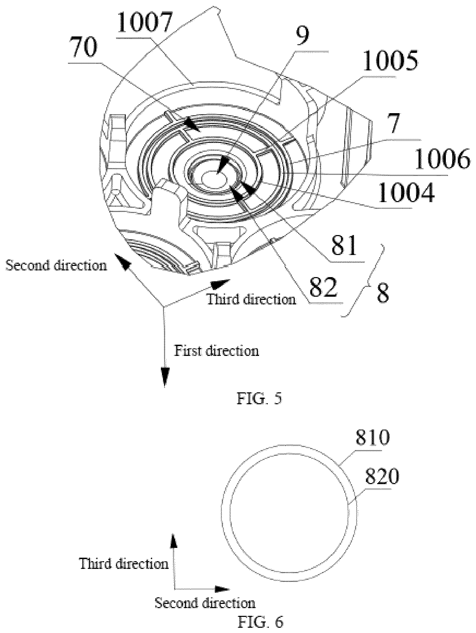

Optionally, as shown in FIG. 5, the first region 81 is disposed outside the second region 82. As shown in FIG. 6, along the first direction, the first region 81 forms a closed first region projection 810, and the second region 82 forms a closed second region projection 820. The projection of the second region 82 is located within the first region projection 810. When the pressure relief mechanism 1013 is opened, the first region 81 and the second region 82 can store the gas or liquid released by the pressure relief mechanism 1013. For example, during transportation, when the internal pressure of the battery cell 1 does not exceed the safety threshold, the pressure relief mechanism 1013 may be opened by an external force.

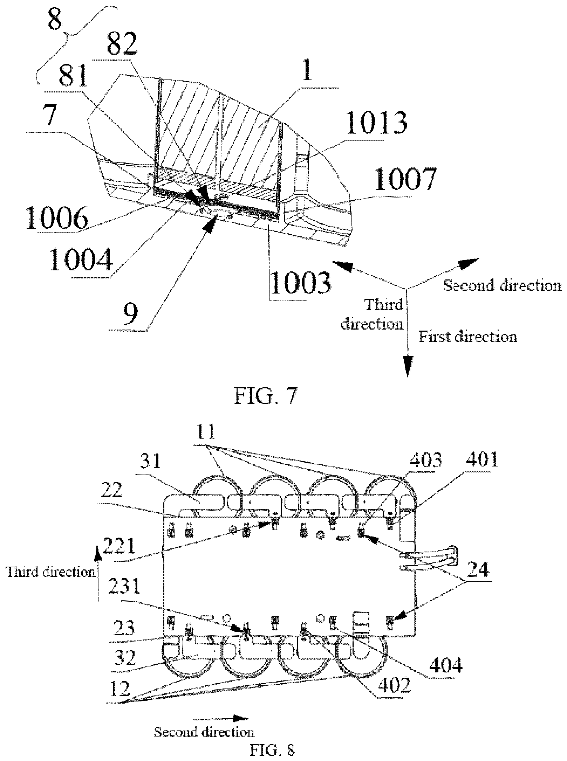

In some embodiments, as shown in FIG. 5 and FIG. 7, a second protruding portion 1004 that protrudes beyond the inner surface of the first wall 1003 is further disposed on the second housing 602. The second protruding portion 1004 is disposed around the pressure relief region 8. The second protruding portion abuts against the battery cell 1. The first protruding portion 7 is disposed around the second protruding portion 1004. The second protruding portion 1004 is disposed on the inner surface of the first wall 1003 between the first protruding portion 7 and the pressure relief region 8. The second protruding portion 1004 can not only enhance the structural strength of the first wall 1003, but also prevent the binder from flowing from the first protruding portion 7 to the pressure relief region 8 to interfere with the operation of the pressure relief region 8.

In some embodiments, a binder is disposed between the second protruding portion 1004 and the first protruding portion 7. The binder is bonded to at least one of the battery cell 1 or the first wall 1003. Optionally, the binder is bonded to the first wall 1003 to implement connection between the battery cell 1 and the first wall 1003. Optionally, the binder may be bonded to the battery cell 1. Optionally, the binder is bonded to both the first wall 1003 and the battery cell 1 to implement connection between the battery cell 1 and the first wall 1003. The above technical solution not only increases the firmness of the connection between the battery cell 1 and the first wall 1003, but also further isolates the first recessed portion 70 from the surrounding battery cells 1. The binder may be adhesive-sealant, styrofoam, potting glue, or other glue to implement a firm connection between the battery cell 1 and the first wall 1003.

In some embodiments, as shown in FIG. 5 and FIG. 7, a third protruding portion 1006 protruding beyond the inner surface of the first wall 1003 may be disposed on the second housing 602. The third protruding portion 1006 is disposed between the second protruding portion 1004 and the first protruding portion 7. A clearance exists between the third protruding portion 1006 and the first protruding portion 7. The clearance between the third protruding portion 1006 and the first protruding portion 7 is filled with a binder. The binder is disposed in the clearance between the third protruding portion 1006 and the first protruding portion 7. The binder is bonded to at least one of the battery cell 1 or the first wall 1003. Optionally, the binder is bonded to the first wall 1003. Optionally, the binder is bonded to the battery cell 1. Optionally, the binder is bonded to both the first wall 1003 and the battery cell 1 to fill the clearance between the third protruding portion 1006 and the first protruding portion 7. Through the above technical solution, the battery cell 1 is firmly connected to the first wall 1003, the first recessed portion 70 can be isolated from the surrounding battery cells 1, and the emissions of the first recessed portion 70 can be restricted from flowing to the surrounding battery cells 1. The binder may be adhesive-sealant, styrofoam, potting glue, or other glue to implement a firm connection between the battery cell 1 and the first wall 1003.

Optionally, as shown in FIG. 5, a first connecting portion 1005 is disposed on the inner surface of the first wall 1003. The first connecting portion 1005 is connected between the third protruding portion 1006 and the second protruding portion 1004. In some embodiments, the first connecting portion 1005 is connected between the third protruding portion 1006 and the second protruding portion 1004, thereby further increasing the strength of the first wall 1003 except the pressure relief region 8, and making the rupture of the first wall 1003 occur in the pressure relief region 8.

In some embodiments, a second recessed portion 9 is disposed on the inner surface of the first wall 1003. Along the first direction, a projection of the second recessed portion 9 is located within a projection of the second protruding portion 1004. In this way, the second recessed portion 9 can communicate with the first recessed portion 70, so as to communicate with the pressure relief mechanism 1013 of the battery cell 1. The first recessed portion 70, the second recessed portion 9, the second protruding portion 1004, and the battery cell 1 define an accommodation cavity. The accommodation cavity is configured to store the substances released by the pressure relief mechanism 1013 of the battery cell 1. In this way, when the pressure relief mechanism 1013 of the battery cell 1 leaks slightly, the substances released by the pressure relief mechanism 1013 can be temporarily stored in the accommodation cavity. The released substances are restricted from flowing out of the battery housing 6. The accommodation cavity can play a role in buffering the released substances.

Optionally, as shown in FIG. 2 and FIG. 5, a constraining portion 1007 is disposed on the inner surface of the first wall 1003. The constraining portion 1007 is disposed outside the first protruding portion 7 to accommodate one end of the battery cell 1. In some embodiments, the constraining portion 1007 forms a cylindrical structure with one end connected to the first wall 1003. One end of the battery cell 1 is inserted into the cylindrical structure to facilitate positioning and mounting of the battery cell 1. As shown in FIG. 8 to FIG. 10, in some embodiments of this application, the circuit board 2 in the battery pack is disposed on the same side of a plurality of battery cells 1. The plurality of battery cells 1 are electrically connected to the circuit board 2. As shown in FIG. 8, along the first direction, the projection of the circuit board 2 at least partially overlaps the projection of at least a part of the cell housing 20. Along the first direction, the circuit board 2 covers a part of the cell housing 20. A part of the cell housing 20 is not covered by the circuit board 2. Compared with the technical solution in the prior art in which the cell housing 20 is usually fully covered, the technical solution hereof reduces the area of the circuit board 2.

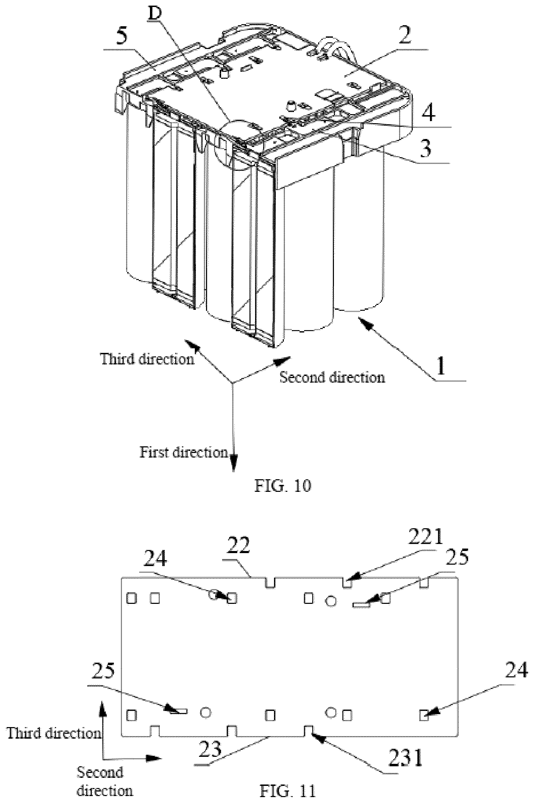

In some embodiments of this application, as shown in FIG. 11, the circuit board 2 includes a first lateral edge 22 and a second lateral edge 23 that are disposed opposite to each other along a third direction. The first lateral edge 22 and the second lateral edge 23 are spaced apart. In some embodiments, the first lateral edge 22 and the second lateral edge 23 are disposed in parallel and at intervals, so that the circuit board 2 is rectangular in shape, thereby facilitating neat arrangement of the battery cells 1 and the busbar component 3.

The plurality of battery cells 1 include at least two first battery cells 11. As shown in FIG. 8, when viewed along the first direction, the electrode terminal 10 of the first battery cell 11 and the circuit board 2 are spaced apart from each other. The junction between the first battery cell 11 and the circuit board 2 is close to the first lateral edge 22. At least two first battery cells 11 are disposed close to the first lateral edge 22. Each first battery cell 11 is disposed close to the first lateral edge 22.

In some embodiments, at the first lateral edge 22 close to the circuit board 2, the busbar components 3 include a first busbar component 31. The first busbar component 31 includes a first base portion 312 and a first connecting portion 311. The first base portion 312 is connected between adjacent first battery cells 11. Along the first direction, the projection of the first base portion 312 is at least partially located outside the projection of the circuit board 2, so as to electrically connect the electrode terminals 10 of two adjacent first battery cells 11. The first connecting portion 311 is configured to be connected to the circuit board 2. The first connecting portion 311 protrudes beyond the first base portion 312, and extends from the first lateral edge 22 of the circuit board 2 to the circuit board 2, thereby reducing the width of the circuit board 2 in a third direction. The third direction is perpendicular to the first direction.

In some embodiments, the conductive pieces 4 include a first conductive piece 401. One end of the first conductive piece 401 is connected to the circuit board 2. Another end of the first conductive piece 401 is connected to the first connecting portion 311. In this way, an electrical connection is implemented between the circuit board 2 and the first connecting portion 311, and therefore, an electrical connection is implemented between the circuit board 2 and the first battery cell 11.

Through the above structure, the first battery cell 11 can be electrically connected to the circuit board 2 by the first busbar component 31 and the first conductive piece 401, thereby reducing the width of the circuit board 2 in the third direction. Further, the plurality of first battery cells 11 can be centrally connected to the edge of the circuit board 2 by the first busbar component 31 and the first conductive piece 401. In this way, an effective flat region of a relatively large area can be available on the circuit board 2. The above structure enables the overall area of the circuit board 2 to still meet the requirement on the effective area after the overall area is reduced, reduces the redundancy of the circuit board 2, simplifies the circuit board 2, and simplifies the battery pack.

In some embodiments, as shown in FIG. 11, a first notch 221 penetrating the first lateral edge 22 is created on the circuit board 2. The first connecting portion 311 is connected to the circuit board 2 through the first notch 221. The first notch 221 is disposed on the first lateral edge 22. At least one of the first conductive piece 401 or the first connecting portion 311 passes through the first notch 221 to implement an electrical connection between the circuit board 2 and the first battery cell 11. Optionally, the first conductive piece 401 is connected to the first connecting portion 311 after passing through the first notch 221, so that the first battery cell 11 is electrically connected to the circuit board 2 by the first conductive piece 401 and the first busbar component 31.

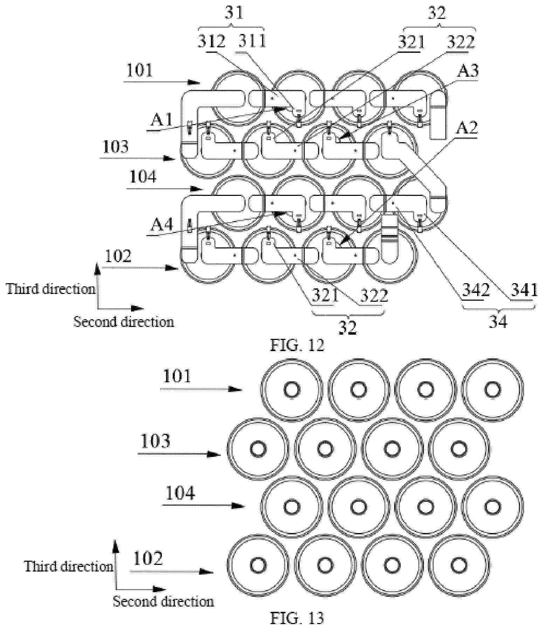

Optionally, as shown in FIG. 12, a first angle A1 exists between the first base portion 312 and the first connecting portion 311. The first angle A1 ranges from 60° to 150°. In this way, the first base portion 312 is extended toward the first lateral edge 22 by bending, thereby facilitating connection between the first connecting portion 311 and the first conductive piece 401. Optionally, the first angle A 1 is 90°, thereby further simplifying the structure of the battery pack.

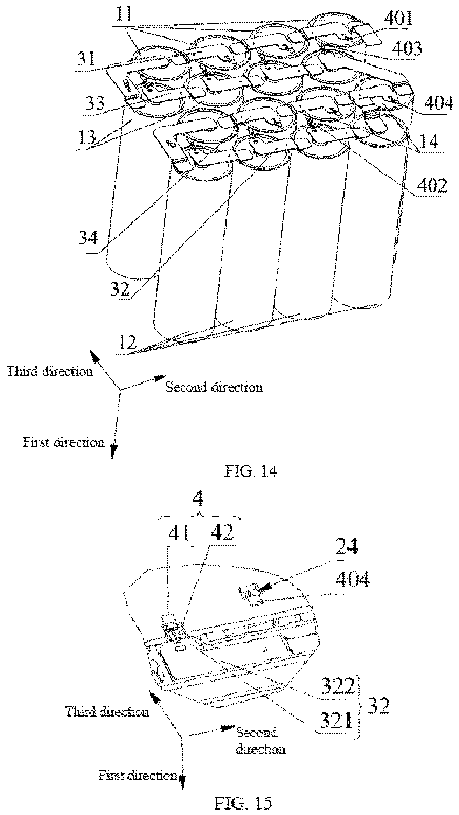

As shown in FIG. 12 and FIG. 13, the first battery cells 11 are arranged along a second direction to form a first cell group 101, thereby making it convenient to arrange at least two first battery cells 11 in groups. The second direction is perpendicular to the first direction and the third direction. The plurality of battery cells 1 include at least two second battery cells 12. When viewed along the first direction, the electrode terminal 10 of the second battery cell 12 and the circuit board 2 are spaced apart from each other. The junction between the second battery cell 12 and the circuit board 2 is close to the second lateral edge 23. At least two second battery cells 12 are disposed close to the second lateral edge 23. Each second battery cell 12 is disposed close to the second lateral edge 23. The busbar components 3 include a second busbar component 32. The second busbar component 32 includes a second base portion 322 and a second connecting portion 321. The second base portion 322 is connected between adjacent second battery cells 12. The second connecting portion 321 is configured to be connected to the circuit board 2. The second connecting portion 321 protrudes beyond the second base portion 322, and extends from the second lateral edge 23 of the circuit board 2 to the circuit board 2, thereby reducing the width of the circuit board 2 in the third direction. As shown in FIG. 14, the conductive pieces 4 include a second conductive piece 402. One end of the second conductive piece 402 is connected to the circuit board 2. Another end of the second conductive piece 402 is connected to the second connecting portion 321. In this way, an electrical connection is implemented between the circuit board 2 and the second connecting portion 321, and therefore, an electrical connection is implemented between the circuit board 2 and the second battery cell 12.

Through the above structure, the second battery cell 12 can be electrically connected to the circuit board 2 by the second busbar component 32 and the second conductive piece 402, thereby reducing the width of the circuit board 2 in the third direction. Further, the plurality of second battery cells 12 can be centrally connected to the edge of the circuit board 2 by the second busbar component 32 and the second conductive piece 402. In this way, an effective flat region of a relatively large area can be available on the circuit board 2. The above structure enables the overall area of the circuit board 2 to still meet the requirement on the effective area after the overall area is reduced, reduces the redundancy of the circuit board 2, simplifies the circuit board 2, and simplifies the battery pack.

In some embodiments, as shown in FIG. 11, a second notch 231 penetrating the second lateral edge 23 is created on the circuit board 2. The second connecting portion 321 is connected to the circuit board 2 through the second notch 231. The second notch 231 is disposed on the second lateral edge 23. At least one of the second conductive piece 402 or the second connecting portion 321 passes through the second notch 231 to implement an electrical connection between the circuit board 2 and the second battery cell 12. The second conductive piece 402 is connected to the second connecting portion 321 after passing through the second notch 231, so that the second battery cell 12 is electrically connected to the circuit board 2 by the second conductive piece 402 and the second busbar component 32.

Optionally, as shown in FIG. 12, a second angle A2 exists between the second base portion 322 and the second connecting portion 321. The second angle A2 ranges from 60° to 150°. In this way, the second base portion 322 is extended toward the second lateral edge 23 by bending, thereby facilitating connection between the second connecting portion 321 and the second conductive piece 402. Optionally, the second angle A2 is 90°, thereby further simplifying the structure of the battery pack.

As shown in FIG. 12 and FIG. 13, the second battery cells 12 are arranged along the second direction to form a second cell group 102, thereby making it convenient to arrange at least two second battery cells 12 in groups.

In some embodiments, as shown in FIG. 14, the plurality of battery cells 1 include at least two third battery cells 13. The busbar components 3 include a third busbar component 33. The third busbar component 33 electrically connects at least two third battery cells 13. As shown in FIG. 12, the third busbar component 33 includes a third base portion 332 and a third connecting portion 331. The third base portion 332 is connected between adjacent third battery cells 13. The third connecting portion 331 is configured to be connected to the circuit board 2. The third connecting portion 331 protrudes beyond the third base portion 332, and extends to the circuit board 2. As shown in FIG. 14, the conductive pieces 4 include a third conductive piece 403. One end of the third conductive piece 403 is connected to the circuit board 2. Another end of the third conductive piece 403 is connected to the third connecting portion 331. In this way, an electrical connection is implemented between the circuit board 2 and the third connecting portion 331, and therefore, an electrical connection is implemented between the circuit board 2 and the third battery cell 13. Along the first direction, the projection of the third battery cell 13 and the projection of the third busbar component 33 both lie inside the projection of the circuit board 2.

In some embodiments, as shown in FIG. 8, a pass-through hole 24 penetrating the circuit board 2 is created on the circuit board 2. The third connecting portion 331 is connected to the circuit board 2 through the pass-through hole 24. At least one of the third conductive piece 403 or the third connecting portion 331 passes through the pass-through hole 24 to implement an electrical connection between the circuit board 2 and the third battery cell 13. Optionally, the third conductive piece 403 is connected to the third connecting portion 331 after passing through the pass-through hole 24, so that the third battery cell 13 is electrically connected to the circuit board 2 by the third conductive piece 403 and the third busbar component 33. Along the first direction, a part of the projection of the third busbar component 33 is located within the projection of the pass-through hole 24, and the remaining part of the projection is located within the projection of the circuit board 2.

Optionally, as shown in FIG. 12, a third angle A3 exists between the third base portion 332 and the third connecting portion 331. The third angle A3 ranges from 60° to 150°. In this way, the third base portion 332 is extended toward the pass-through hole 24 by bending, thereby facilitating connection between the third connecting portion 331 and the third conductive piece 403. Optionally, the third angle A3 is 90°, thereby further simplifying the structure of the battery pack.

As shown in FIG. 12 and FIG. 13, at least two third battery cells 13 are located between the first cell group 101 and the second cell group 102. The third battery cells 13 are arranged along the second direction to form a third cell group 103. Along the third direction, the third cell group 103 is disposed between the first cell group 101 and the second cell group 102, thereby making it convenient to arrange at least two third battery cells 13 in groups neatly.

In some embodiments of this application, as shown in FIG. 14, a plurality of battery cells 1 include at least two fourth battery cells 14. The busbar components 3 include a fourth busbar component 34. The fourth busbar component 34 electrically connects at least two fourth battery cells 14. As shown in FIG. 12, the fourth busbar component 34 includes a fourth base portion 342 and a fourth connecting portion 341. The fourth base portion 342 is connected between adjacent fourth battery cells 14. The fourth connecting portion 341 is configured to be connected to the circuit board 2. The fourth connecting portion 341 protrudes beyond the fourth base portion 342, and extends to the circuit board 2. The conductive pieces 4 include a fourth conductive piece 404. One end of the fourth conductive piece 404 is connected to the circuit board 2. Another end of the fourth conductive piece 404 is connected to the fourth connecting portion 341. In this way, an electrical connection is implemented between the circuit board 2 and the fourth connecting portion 341, and therefore, an electrical connection is implemented between the circuit board 2 and the fourth battery cell 14. Along the first direction, the projection of the fourth battery cell 14 and the projection of the fourth busbar component 34 both are located within the projection of the circuit board 2.

In some embodiments of this application, as shown in FIG. 8, the fourth connecting portion 341 is connected to the circuit board 2 through the pass-through hole 24. At least one of the fourth conductive piece 404 or the fourth connecting portion 341 passes through the pass-through hole 24 to implement an electrical connection between the circuit board 2 and the fourth battery cell 14. Specifically, the fourth conductive piece 404 is connected to the fourth connecting portion 341 after passing through the pass-through hole 24, so that the fourth battery cell 14 is electrically connected to the circuit board 2 by the fourth conductive piece 404 and the fourth busbar component 34. Along the first direction, a part of the projection of the fourth busbar component 34 is located within the projection of the pass-through hole 24, and the remaining part of the projection is located within the projection of the circuit board 2.

Optionally, as shown in FIG. 12, a fourth angle A4 exists between the fourth base portion 342 and the fourth connecting portion 341. The fourth angle A4 ranges from 60° to 150°. In this way, the fourth base portion 342 is extended toward the pass-through hole 24 by bending, thereby facilitating connection between the fourth connecting portion 341 and the fourth conductive piece 404. Optionally, the fourth angle A4 is 90°, thereby further simplifying the structure of the battery pack.

As shown in FIG. 12 and FIG. 13, at least two fourth battery cells 14 are located between the first cell group 101 and the second cell group 102. The fourth battery cells 14 are arranged along the second direction to form a fourth cell group 104. The fourth cell group 104 is disposed between the first cell group 101 and the second cell group 102, thereby making it convenient to arrange at least two fourth battery cells 14 in groups and making the arrangement neat. Optionally, the fourth cell group 104 is disposed between the third cell group 103 and the second cell group 102.

In some embodiments, as shown in FIG. 8, the projections of the pass-through holes 24 corresponding to the third conductive pieces 403 along the second direction at least partially overlap, thereby reducing the width of the footprint of close the pass-through holes 24 on the circuit board 2 in the third direction, increasing the width of the flat region in the middle of the circuit board 2 in the third direction, and increasing the area of the effective flat region in the middle of the circuit board 2.

The projections of the pass-through holes 24 corresponding to the fourth conductive pieces 404 along the second direction at least partially overlap, thereby reducing the width of the footprint of all the pass-through holes 24 on the circuit board 2 in the third direction, increasing the width of the flat region in the middle of the circuit board 2 in the third direction, and increasing the area of the effective flat region in the middle of the circuit board 2.

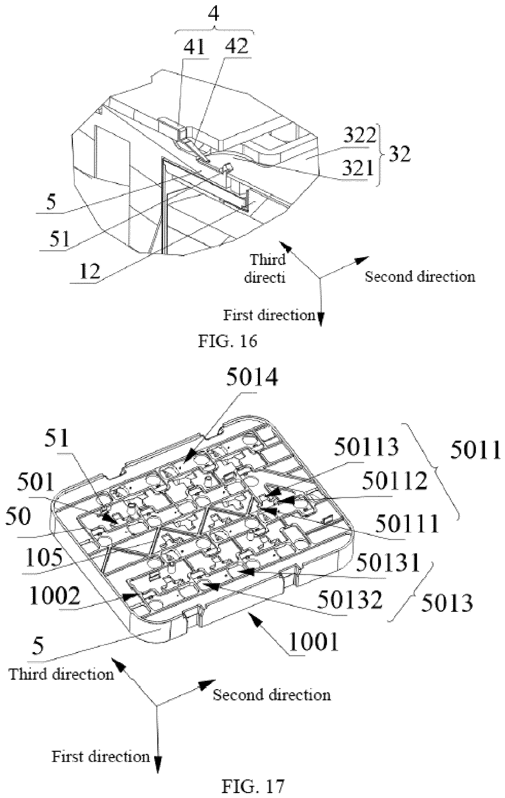

In some embodiments of this application, as shown in FIG. 15 and FIG. 16, the conductive piece 4 includes a first section 41 and a second section 42 connected to each other. The first section 41 is connected to the circuit board 2. The second section 42 in the conductive piece 4 is bent toward the busbar component 3 against the first section 41 and connected. Optionally, the first section 41 may be connected to the circuit board 2 by welding, bonding, or other means. Optionally, the first section 41 may be connected to the circuit board 2 by snap connection, elastic connection, or other means. Optionally, the second section 42 may be connected to the busbar component 3 by welding, bonding, or other means. Optionally, the second section 42 may be connected to the busbar component 3 by snap connection, elastic connection, or other means.

Optionally, the second section 42 is an elastic piece. The second section 42 may be connected to the busbar component 3 by abutting. The abutting connection facilitates detachment and connection between the conductive piece 4 and the busbar component 3. The second section 42 is an elastic piece, thereby improving the firmness of the abutment between the second section 42 and the busbar component 3, and preventing poor contact between the second section and the busbar component. The abutment here means direct contact between the second section 42 and the busbar component 3, with an interaction force exerted between the second section and the busbar component.

The second section 42 of the first conductive piece 401 abuts the first connecting portion 311 of the first busbar component 31 after passing through the first notch 221. The second section 42 of the second conductive piece 402 abuts the second connecting portion 321 of the second busbar component 32 after passing through the second notch 231. The second section 42 of the third conductive piece 403 abuts the second connecting portion 321 of the third busbar component 33 after passing through the pass-through hole 24. The second section 42 of the fourth conductive piece 404 abuts the second connecting portion 321 of the fourth busbar component 34 after passing through the pass-through hole 24.

In some embodiments of this application, as shown in FIG. 8, along the second direction, the projection of the first section 41 of the first conductive piece 401 at least partially overlaps the projection of the first section 41 of the third conductive piece 403, thereby reducing the footprint of the first conductive piece 401 and the third conductive piece 403 in the third direction, and reducing the width of the footprint of the connection region between the circuit board 2 and the battery cell 1 on the circuit board 2 in the third direction. This increases the width of the flat region in the middle of the circuit board 2 in the third direction, increases the area of the effective flat region in the middle of the circuit board 2, enables the overall area of the circuit board 2 to still meet the requirement on the effective area after the overall area is reduced, reduces the redundancy of the circuit board 2, simplifies the circuit board 2, and simplifies the battery pack.

In some embodiments, along the second direction, the projection of the first section 41 of the second conductive piece 402 at least partially overlaps the projection of the first section 41 of the fourth conductive piece 404, thereby reducing the footprint of the second conductive piece 402 and the fourth conductive piece 404 in the third direction, and reducing the width of the footprint of the connection region between the circuit board 2 and the battery cell 1 on the circuit board 2 in the third direction. This increases the width of the flat region in the middle of the circuit board 2 in the third direction, increases the area of the effective flat region in the middle of the circuit board 2, enables the overall area of the circuit board 2 to still meet the requirement on the effective area after being reduced, reduces the redundancy of the circuit board 2, simplifies the circuit board 2, and simplifies the battery pack.

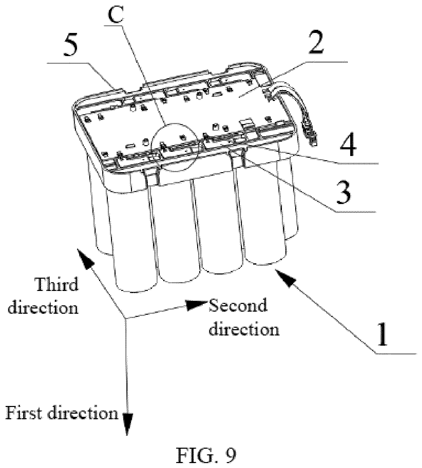

As shown in FIG. 9 and FIG. 10, the circuit board 2 and a plurality of busbar components 3 are all disposed on one side of the bracket 5, the side being facing away from the cell housing 20. At least a part of the busbar component 3 is disposed between the bracket 5 and the circuit board 2. As shown in FIG. 17, a receptacle 5014 is disposed on one side of the bracket 5, the side being facing away from the battery cell 1,. At least a part of the busbar component 3 is accommodated and connected in the receptacle 5014. In some embodiments of this application, the busbar component 3 is snap-fastened into the receptacle 5014. Optionally, as shown in FIG. 11, a first snap slot 25 is disposed on the circuit board 2. As shown in FIG. 17, a first buckle 51 is disposed on the bracket 5. The first buckle 51 is snap-fastened to the first snap slot 25. In this way, the circuit board 2 is connected to the bracket 5, and the conductive piece 4 is clamped between the circuit board 2 and the bracket 5. Therefore, the second section 42 of the elastic conductive piece 4 can abut on the busbar component 3 more firmly, thereby reducing the possibility of poor contact between the conductive piece 4 and the busbar component.

In some embodiments, as shown in FIG. 17 to FIG. 21, a connecting hole 501 is created on the bracket 5. The connecting hole 501 is configured to be filled with a first bonding material 502. The connecting hole 501 filled with the first bonding material 502 can effectively reduce the overflow of the first bonding material 502, and reduce the impact of the first bonding material 502 on surrounding components. At least two battery cells 1 are connected to the bracket 5 through the first bonding material 502 added in the connecting hole 501. At least one of the at least two battery cells 1 or the bracket 5 is connected to the inner wall of the battery housing 6. In this way, the entirety of the at least two battery cells 1 and the bracket 5 is fixed to the battery housing 6, thereby implementing fixation of the entirety of at least two battery cells 1 and the bracket 5 to the battery housing 6, constraining the movement of the entirety of the at least two battery cells 1 and the bracket 5, reducing the possibility of collision with other components due to movement, improving the performance of protection for the battery pack, reducing the occurrence of safety accidents, and enhancing the safety of the battery pack. Optionally, the first bonding material 502 may be glue. The glue is of some fluidity. The operator can fill the connecting hole 501 with the glue conveniently to bond the battery cell 1 to the bracket 5. Optionally, the glue may be adhesive-sealant, styrofoam, potting glue, or the like.

In some embodiments, as shown in FIG. 17 to FIG. 21, the bracket 5 includes a supporting wall 50. The connecting hole 501 penetrates the supporting wall 50. The supporting wall 50 includes a first side 1001 and a second side 1002 disposed opposite to each other along the first direction. The second side 1002 is facing away from the cell housing 20. A circuit board 2 is disposed on the second side 1002. A recessed portion 5012 is disposed on a first side 1001, close to the battery cell 1, of the supporting wall 50. An end portion, close to the bracket 5, of the battery cell 1 is disposed in the recessed portion 5012. Optionally, the battery cell 1 is connected to the bracket 5 by a second bonding material. In this application, the second bonding material may be glue. The glue is of some fluidity. The operator can fill the recessed portion 5012 with the glue conveniently so that the end portion of the battery cell 1 is positioned in the recessed portion 5012. Optionally, the glue may be adhesive-sealant, styrofoam, potting glue, double-sided tape, or the like.

In some embodiments, the recessed portion 5012 communicates to the connecting hole 501. In this way, when the battery cell 1 is inserted into the recessed portion 5012 on the first side 1001, the first bonding material 502 can be injected into the connecting hole 501 from one side of the connecting hole 501, the side being facing away from the battery cell 1. Therefore, the first bonding material 502 can connect the bracket 5 and the battery cell 1 conveniently, and the bonding operation is convenient. The second bonding material and the first bonding material 502 may be the same type of bonding material or different types of bonding materials. Optionally, in a case that the second bonding material and the first bonding material 502 are the same type of bonding material, when the connecting hole 501 is filled with the first bonding material 502, the first bonding material 502 can flow into the recessed portion 5012. The first bonding material 502 flowing into the recessed portion 5012 can serve the function of the second bonding material to position the battery cell 1 in the recessed portion 5012. In some embodiments, a clearance exists between a part, inserted into the recessed portion 5012, of the battery cell 1 and the bottom face of the recessed portion 5012. The first bonding material 502 can flow into the clearance between the bottom face of the recessed portion 5012 and the battery cell 1 through the clearance. Optionally, the battery cell 1 may be bonded to the recessed portion 5012 by the second bonding material, and then the first bonding material 502 is disposed in the connecting hole 501. The second bonding material and the first bonding material may be the same type of glue or different types of glues.

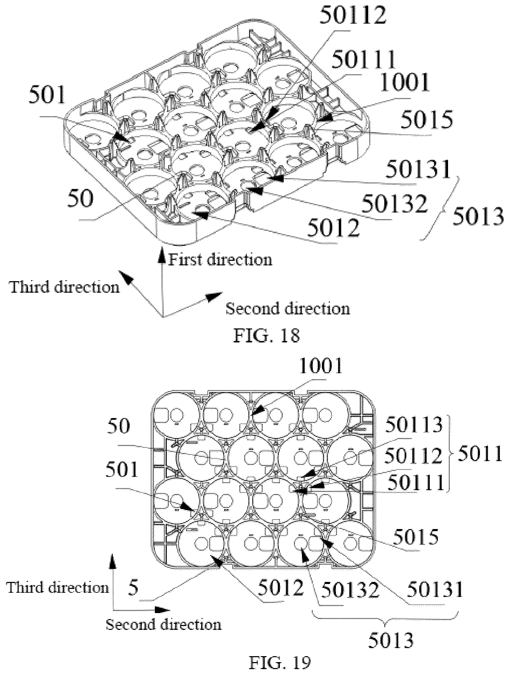

In some embodiments, as shown in FIG. 17 and FIG. 19, a through-hole 5013 is created on the recessed portion 5012. When viewed along the first direction, the electrode terminal 10 of the battery cell 1 is located in the through-hole 5013. When viewed along the first direction, the electrode terminal 10 is located in the through-hole 5013, which means that the entire electrode terminal 10 of the battery cell 1 is located in the through-hole 5013; or a part of the electrode terminal 10 of the battery cell 1 is located in the through-hole 5013 and another part extends outward from the through-hole 5013; or the electrode terminal 10 of the battery cell 1 extends into the through-hole 5013, and the projection of the electrode terminal 10 along the first direction coincides with the projection of the through-hole 5013 along the first direction.

In some embodiments, the busbar component 3 is disposed on a second side 1002. The plurality of battery cells 1 are electrically connected to each other by the busbar component 3. The plurality of battery cells 1 may be connected in series, parallel, or series-and-parallel pattern by the busbar component 3. The series-and-parallel pattern means a combination of series connection and parallel connection of the plurality of battery cells 1.

The circuit board 2 and the busbar component 3 are both connected to the second side 1002 of the bracket 5. The cell housing 20 is connected to the first side 1001, so that the cell housing 20 and the circuit board 2 are placed on two opposite sides of the bracket 5 respectively. The circuit board 2 and the busbar component 3 are both close to the electrode terminal 10 of the battery cell 1, thereby not only facilitating the arrangement of components in the battery pack, but also shortening the connection distance between the circuit board 2 and the electrode terminal 10 of the battery cell 1, and reducing the need of the busbar component 3 and the conductive piece 4.

In some embodiments, as shown in FIG. 17, FIG. 20, and FIG. 21, the bracket 5 includes a plurality of fifth protruding portions 105. The fifth protruding portions 105 are disposed on the second side 1002. In this way, the bonding material added in and overflowing out of the connecting holes 501 can be restricted by the protrusively disposed fifth protruding portions 105 from flowing. Along the first direction, the projections of the plurality of fifth protruding portions 105 form a closed region, and the projections of the connecting holes 501 lie inside the closed region formed by the projections of the fifth protruding portions 105.

In some embodiments, as shown in FIG. 17 to FIG. 19, the through-hole 5013 includes a first through-hole 50131 and a second through-hole 50132. Among two adjacent battery cells 1, the positive terminal 1011 or the negative terminal 1012 of one battery cell 1 is disposed in the first through-hole 50131, and the positive terminal 1011 or the negative terminal 1012 of the other battery cell 1 is disposed in the second through-hole 50132. Adjacent battery cells can be connected to each other in series or in parallel.

Optionally, along the first direction, the projection of the through-hole 50 Band the projection of the connecting hole 501 are spaced apart from each other, so that the through-hole 5013 is prevented from communicating to the connecting hole 501, thereby reducing the possibility of adhesion of the first bonding material 502 in the connecting hole 501 to the electrode terminal 10.

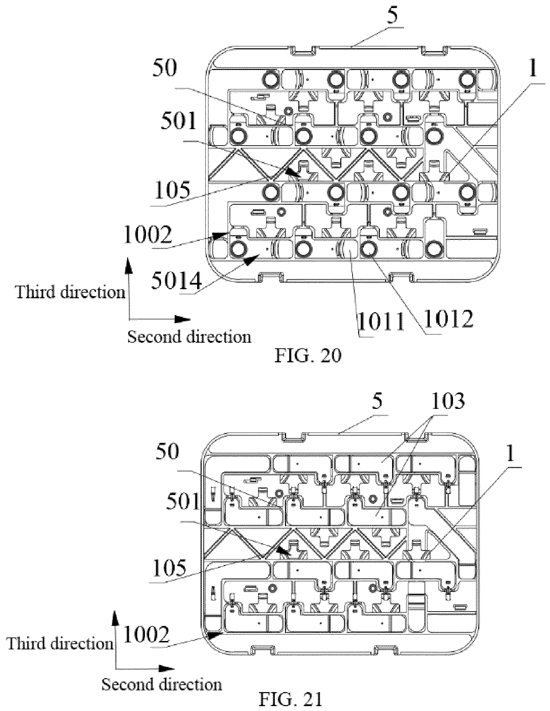

Optionally, as shown in FIG. 20, the receptacle 5014 communicates between the first through-holes 50131 and the second through-holes 50132 corresponding to different battery cells 1. The busbar component 3 placed in the receptacle 5014 can connect the battery cells 1 in series or in parallel. The busbar component 3 is disposed in the receptacle 5014, thereby not only facilitating the mounting of the busbar component 3, but also reducing the thickness of the space occupied by the busbar component 3 in the first direction. Optionally, a part of the receptacle 5014 communicates between the first through-holes 50131 corresponding to different battery cells 1, and a part of the receptacle 5014 communicates between the second through-holes 50132 corresponding to different battery cells 1, so that the busbar components 3 placed in the receptacle 5014 can connect the battery cells 1 in parallel. Optionally, a part of the receptacle 5014 communicates between the first through-holes 50131 corresponding to different battery cells 1, a part of the receptacle 5014 communicates between the second through-holes 50132 corresponding to different battery cells 1, and a part of the receptacle 5014 communicates between the first through-holes 50131 and the second through-holes 50132 corresponding to different battery cells 1, so that the busbar component 3 placed in the receptacle 5014 can connect the battery cells 1 in series-and-parallel pattern.

In some embodiments, the connecting hole 501 includes a first hole 50111 and a second hole 50112. When viewed along the first direction, the first hole 50111 and the second hole 50112 are spaced apart from each other. When viewed along the first direction, a part of the cell housing 20 of at least one battery cell 1 is located in the first hole 50111. A part of the cell housing 20 of at least one battery cell 1 is located in the second hole 50112. In this way, the first bonding material 502 added in the first hole 50111 and the second hole 50112 can connect the cell housings 20 of at least two battery cells 1 to the supporting wall 50. The cured first bonding material 502 connects at least two adjacent battery cells 1 to form a whole, thereby reducing the probability of relative movement between adjacent battery cells 1 and improving the safety of the battery pack.

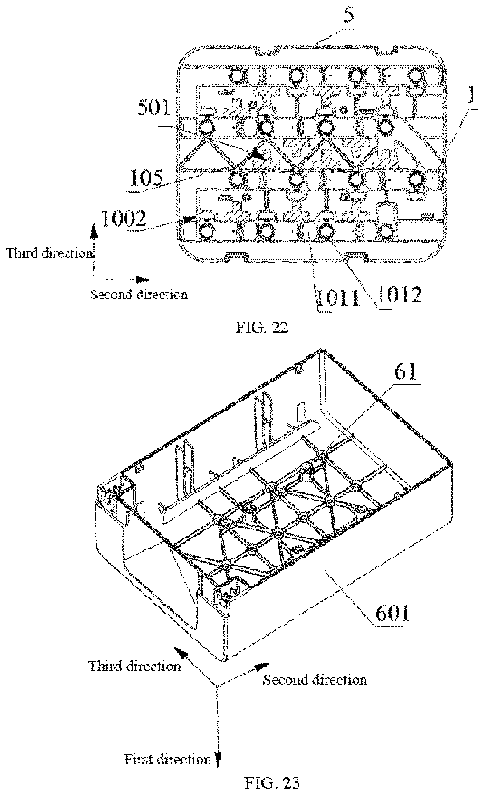

As shown in FIG. 18 to FIG. 19, the connecting hole 501 further includes a third hole 50113. When viewed along the first direction, the projections of the first hole 50111, the second hole 50112, and the third hole 50113 are spaced apart from each other. When viewed along the first direction, a part of the cell housing 20 of at least one battery cell 1 is located in the third hole 50113. The first bonding material 502 added in the first hole 50111, the second hole 50112, and the third hole 50113 connects the cell housings 20 of at least three battery cells 1 to the supporting wall 50. As shown in FIG. 20, along the first direction, the projections of 3 cell housings 20 partially is located within the projections of the first hole 50111, the second hole 50112, and the third hole 50113 of the same connecting hole 501, respectively. In this way, it is convenient to bond the 3 cell housings 20 to the bracket 5 through the first bonding material 502 added in the first hole 50111, the second hole 50112, and the third hole 50113, respectively. As shown in FIG. 22, the cured first bonding material 502 connects 3 adjacent battery cells 1 to form a whole, thereby reducing the probability of relative movement between adjacent battery cells 1 and improving the safety of the battery pack.

In some embodiments, along the second direction, the supporting wall 50 is connected to 2 adjacent cell housings 20 in the first cell group 101 through the first hole 50111 and the second hole 50112. The supporting wall 50 is connected to 1 cell housing 20 in the third cell group 103 through the third hole 50113. The supporting wall 50 is connected to 2 adjacent cell housings 20 in the second cell group 102 through the first hole 50111 and the second hole 50112. The supporting wall 50 is connected to 1 cell housing 20 in the fourth cell group 104 through the third hole 50113. In this way, the plurality of battery cells 1 in the battery pack can be connected to the supporting wall 50 through the first bonding material 502 to form a whole, thereby reducing the probability of relative movement between adjacent battery cells 1 and improving the safety of the battery pack.

In some embodiments, the connecting holes 501 are evenly distributed along the second direction, thereby ensuring that the strength of the bracket 5 is distributed uniformly.

In some embodiments, a plurality of recessed portions 5012 are disposed. The junction between adjacent recessed portions 5012 is provided with the connecting hole 501. The adjacent recessed portions 5012 is further provided with a fourth protruding portion 5015. The fourth protruding portion 5015 extends into a clearance between the adjacent battery cells 1 to constrain the movement of the battery cells 1.

In some embodiments, when viewed along the first direction, the projections of the first hole 50111, the second hole 50112, and the third hole 50113 of the same connecting hole 501 are spaced apart from each other. The fourth protruding portion 5015 is positioned between the first hole 50111, the second hole 50112, and the third hole 50113. The fourth protruding portion 5015 partitions off the first hole 50111, the second hole 50112, and the third hole 50113. The fourth protruding portion 5015 can increase the strength of the junction between adjacent recessed portions 5012, thereby increasing the structural strength of the bracket 5.

In some embodiments, as shown in FIG. 23, a constraining rod 61 is disposed on the inner wall of the first housing 601. The constraining rod 61 is disposed toward the circuit board 2, and is configured to constrain the position of the circuit board 2. In this way, when the battery pack is subjected to vibration, collision, or other forces, the circuit board 2 is prevented from moving much. The conductive piece 4 between the circuit board 2 and the bracket 5 can keep abutting against the busbar component 3, thereby improving the reliability of the abutment between the conductive piece and the busbar component and reducing the risk of failure.

Optionally, the inner wall of the first housing 601 abuts against the bracket 5. In this way, one end of the entirety of the bracket 5 and the battery cells 1 abuts against the second housing 602 to implement fixation, the end being facing away from the first housing 601. Optionally, a pillar is disposed on the inner wall of the first housing 601. The first housing 601 is connected to the bracket 5 through the pillar, thereby ensuring the firmness of the connection between the bracket 5 and the battery housing 6, and effectively alleviating the wobbling of the entirety of the bracket 5 and the battery cells 1 in the accommodation space. The pillar implements the connection between the first housing 601 and the bracket 5 by abutting against the bracket 5. The abutting connection facilitates detachment and connection between the pillar of the first housing 601 and the bracket 5. The abutment here means direct contact between the pillar and the bracket 5, with an interaction force exerted between the pillar and the bracket.
some embodiments of this application further provide an electrical device. The electrical device includes the battery pack disclosed in the above technical solution. The battery pack is configured to provide electrical energy for the electrical device.

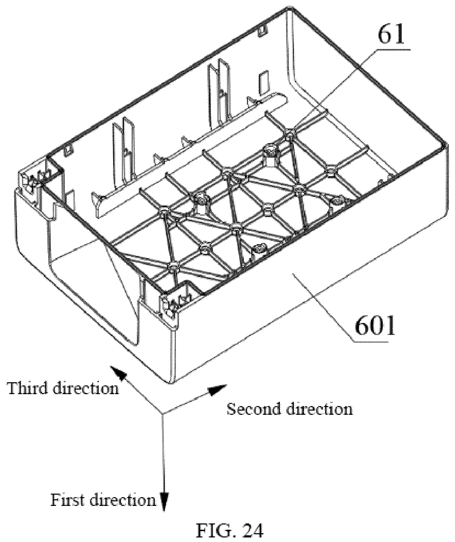

As shown in FIG. 24, an embodiment of this application provides an electrical device 3000 that uses a battery pack 2000 as a power supply. The electrical device 3000 may be, but is not limited to, a mobile phone, a portable device, a laptop computer, an electric toy, an electric tool, an electric vehicle, or the like. The electric tool may be a metal cutting electric tool, a cleaning tool, or the like, such as an electric drill, an electric wrench, a vacuum cleaner, or a robot cleaner. The electrical device 3000 is not particularly limited herein.

Finally, it is hereby noted that some foregoing embodiments are merely intended to describe the technical solutions of this application but not to limit this application. Although this application has been described in detail with reference to some foregoing embodiments, a person of ordinary skill in the art understands that modifications may still be made to the technical solutions described in some foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of some embodiments of this application. Particularly, to the extent that no structural conflict exists, various technical features mentioned in different some embodiments may be combined in any manner. This application is not limited to some specific embodiments disclosed herein, but includes all technical solutions falling within the scope of the claims.

## Claims

1. A battery pack, comprising:
a battery housing; and a battery cell accommodated in the battery housing; the battery housing comprises a first wall), and a first protruding portion protruding beyond an inner surface of the first wall; the first protruding portion and the first wall form a first recessed portion;
a pressure relief mechanism is disposed at one end of the battery cell along a first direction, the one end of the battery cell being oriented toward the first wall; the one end of the battery cell is connected to the first protruding portion;
along the first direction, a projection of the pressure relief mechanism is located within a projection of the first recessed portion.

2. The battery pack according to claim 1, wherein the first recessed portion comprises a pressure relief region disposed on the first wall; when viewed along the first direction, a projection of the pressure relief region overlaps a projection of the pressure relief mechanism; and the pressure relief region and the pressure relief mechanism are configured to release internal pressure of the battery pack.

3. The battery pack according to claim 2, wherein the pressure relief region comprises a first region and a second region; and, along the first direction, the first region is farther away from the first protruding portion than the second region.

4. The battery pack according to claim 3, wherein the first region is disposed outside the second region; and, along the first direction, the first region forms a closed first region projection, the second region forms a closed second region projection, and the second region projection is located within the first region projection.

5. The battery pack according to claim 3, wherein the first wall comprises a first part and a second part, the first part and the first protruding portion form the first recessed portion; and, along the first direction, a thickness of the first region is less than a thickness of the second part.

6. The battery pack according to claim 3, wherein a thickness of the first region is less than a thickness of the second region along the first direction.

7. The battery pack according to any one of claims 1 to 6, wherein the first wall comprises a first part and a second part, the first part and the first protruding portion form the first recessed portion; along the first direction, the pressure relief region is far away from an inner surface of the second part.

8. The battery pack according to claim 7, wherein the battery housing is provided with a second protruding portion, the second protruding portion protrudes beyond the inner surface of the first wall and is disposed outside the pressure relief region; the second protruding portion abuts against the battery cell, and the first protruding portion is disposed outside the second protruding portion.

9. The battery pack according to claim 8, wherein a second recessed portion is disposed on the inner surface of the first wall; and, along the first direction, a projection of the second recessed portion is located within a projection of the second protruding portion.

10. The battery pack according to claim 9, wherein the first recessed portion, the second recessed portion, the second protruding portion, and the battery cell form an accommodation cavity.

11. The battery pack according to claim 8, wherein a binder is disposed between the second protruding portion and the first protruding portion, and the binder is bonded to at least one of the battery cell or the first wall.

12. The battery pack according to claim 8, wherein the battery housing is provided with a third protruding portion, the third protruding portion protruding beyond the inner surface of the first wall; the third protruding portion is disposed between the second protruding portion and the first protruding portion, a binder is disposed in a clearance between the third protruding portion and the first protruding portion, and the binder is bonded to at least one of the battery cell or the first wall.

13. The battery pack according to any one of claims 1 to 12, wherein a constraining portion is further disposed on the inner surface of the first wall, and the constraining portion is disposed outside the first protruding portion to accommodate one end of the battery cell.

14. The battery pack according to any one of claims 1 to 12, wherein the battery pack further comprises a circuit board, the circuit board is electrically connected to the battery cell, and the circuit board is accommodated in the battery housing.

15. The battery pack according to claim 14, wherein the battery cell comprises a positive terminal and a negative terminal, both the positive terminal and the negative terminal are disposed at one end of the battery cell, the one end of the battery cell being facing away from the pressure relief mechanism,
the circuit board is disposed on one side of the battery cell and is electrically connected to the positive terminal and the negative terminal, the one side of the battery cell being facing away from the pressure relief mechanism.

16. The battery pack according to any one of claims 1 to 15, wherein the battery pack further comprises a bracket and a first bonding material; a plurality of battery cells and the bracket are accommodated in the battery housing; each battery cell comprises a cell housing, an electrode terminal, and an electrode assembly disposed in the cell housing, the bracket is provided with a connecting hole to be filled with the first bonding material, and the connecting hole is filled with the first bonding material.

17. The battery pack according to claim 16, wherein the bracket comprises a supporting wall, the connecting hole penetrates the supporting wall, the supporting wall comprises a first side and a second side disposed opposite to each other along the first direction, the first side is closer to the battery cell than the second side, and the second side is facing away from the cell housing, and a circuit board is disposed on the second side.

18. The battery pack according to claim 16, wherein, when viewed along the first direction, the connecting hole comprises a first hole and a second hole, the first hole and the second hole (50112) are spaced apart from each other along the first direction;
a part of the cell housing of at least one battery cell is located in the first hole; a part of the cell housing of at least one battery cell is located in the second hole; and the first bonding material fills the first hole and the second hole to connect the cell housings of at least two battery cells to the supporting wall.

19. The battery pack according to claim 16, wherein the connecting hole comprises a third hole; when viewed along the first direction, projections of the first hole, the second hole, and the third hole are spaced apart from each other;
a part of the cell housing of at least one battery cell is located in the third hole; and the first bonding material in the first hole, the second hole, and the third hole connects the cell housings of at least three battery cells to the supporting wall.

20. The battery pack according to claim 16, wherein the battery pack further comprises a plurality of busbar components and conductive pieces; a circuit board is disposed on a same side of the plurality of battery cells; the circuit board is connected to the battery cells; along the first direction, a projection of the circuit board at least partially overlaps a projection of at least a part of the cell housing; the circuit board comprises a first lateral edge and a second lateral edge arranged in parallel along a third direction; the plurality of battery cells comprises at least two first battery cells; when viewed along the first direction, electrode terminals of the first battery cells and the circuit board are spaced apart from each other; the third direction is perpendicular to the first direction; the busbar components comprise a first busbar component configured to electrically connect at least two battery cells; the first busbar component comprises a first base portion and a first connecting portion; the first base portion is connected to an adjacent first battery cell; the conductive pieces comprise a first conductive piece; one end of the first conductive piece is connected to the circuit board; and another end of the first conductive piece is connected to the first connecting portion.

21. The battery pack according to claim 16, wherein a first notch penetrating a first lateral edge is created on the circuit board, and at least one of a first conductive piece or a first connecting portion passes through the first notch, so that the circuit board is disposed close to the first lateral edge to increase an area of a flat region in a middle of the circuit board.

22. The battery pack according to claim 16, wherein a first conductive piece is connected to the first connecting portion after passing through a first notch.

23. An electrical device, comprising the battery pack according to any one of claims 1 to 21, wherein the battery pack is configured to provide electrical energy.
